(19) Europäisches Patentamt / European Patent Office / Office européen des brevets

(11) **EP 2 545 421 B1**

(12) **EUROPEAN PATENT SPECIFICATION**

(45) Date of publication and mention of the grant of the patent:
**29.11.2023 Bulletin 2023/48**

(21) Application number: **11753676.3**

(22) Date of filing: **04.03.2011**

(51) International Patent Classification (IPC):
**B25J 9/16** (2006.01)     **G05D 3/12** (2006.01)

(52) Cooperative Patent Classification (CPC):
**B25J 9/1697; B25J 9/1676;** G05B 2219/40153; G05B 2219/40191; G05B 2219/40611

(86) International application number:
**PCT/NO2011/000076**

(87) International publication number:
**WO 2011/112098 (15.09.2011 Gazette 2011/37)**

(54) **METHOD AND DEVICE FOR SECURING OPERATION OF AUTOMATIC OR AUTONOMOUS EQUIPMENT**

VERFAHREN UND VORRICHTUNG ZUR SICHERUNG DES BETRIEBS EINER AUTOMATISCHEN ODER AUTONOMEN VORRICHTUNG

PROCÉDÉ ET DISPOSITIF PERMETTANT DE SÉCURISER LE FONCTIONNEMENT D'UN ÉQUIPEMENT AUTOMATIQUE OU AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2010  NO 20100339**

(43) Date of publication of application:
**16.01.2013  Bulletin 2013/03**

(73) Proprietor: **Canrig Robotic Technologies AS
4323 Sandnes (NO)**

(72) Inventors:
 • **MIKALSEN, Kenneth
  4340 Bryne (NO)**
 • **VALEN, Roald
  4352 Kleppe (NO)**

(74) Representative: **Håmsø Patentbyrå AS
P.O. Box 9
4068 Stavanger (NO)**

(56) References cited:
EP-A2- 0 963 816          WO-A1-2006/079617
WO-A1-2008/124657     GB-A- 2 461 815
JP-A- H0 929 673           US-A- 5 715 836
US-A1- 2002 029 134    US-A1- 2005 273 198
US-A1- 2006 008 119    US-A1- 2009 216 375
US-A1- 2010 017 032    US-B1- 6 681 151
US-B1- 6 757 587

• François Chaumette ET AL: "Springer Handbook of Robotics", , 1 January 2008 (2008-01-01), pages 841-866, XP055762351, DOI: 10.1007/978-3-540-30301-5 ISBN: 978-3-540-23957-4 Retrieved from the Internet: URL:https://ebookcentral.proquest.com/lib/epo-ebooks/detail.action?docID=4901894&query=handbook+of+robotics [retrieved on 2020-12-22]

## Description

There is provided a method for monitoring the operation of automatic or autonomous equipment. More particularly it concerns a method for securing operation of automatic or autonomous equipment where the equipment comprises a component being spatially displaced, and where the method includes calculating the component position in the space by means of data from the component control system. The invention also comprises a device for performing the method.

Position reporting of components belonging to automatic or autonomous equipment is according to prior art based on data from the respective control systems of the components. The position report thus represents a calculated position. The control systems steer the components to the desired positions to accomplish the work operations to be implemented. It is common to work with a 3D model of the equipment to also be able to represent the component visually. The 3D model, being continuously updated, is checked continuously, for example to avoid collision between different components.

Verification of the calculated positions can be difficult, particularly in areas difficult to access. If components are damaged or comes loose this may lead to positional deviations difficult to register by means of the control system of the component itself.

Errors of this kind may result in unforeseen, unfortunate and undesirable incidents.

Patent application US 2010/0017032 A1 discloses a device for controlling a robot, the device comprising a robot control unit and a robot sensor, such as a digital camera, fitted on the robot.

Document EP 0 963 816 A2 discloses a method for detecting and compensating dynamic variations of a robot, using the deviation of the detected actual position from the theoretical demanded position.

The object of the invention is to remedy or reduce at least one of the disadvantages of the prior art, or at least to provide a useful alternative to the prior art.

The object is achieved by the features disclosed in the below description and in the subsequent claims.

There is provided a method for monitoring the operation of automatic or autonomous equipment where the equipment comprises a component being displaced in a space for operating a machine for treating a pipe string, and where the method includes:

- calculating the component's position (calculated position) in the space by means of data from a component control system;
- building a 3D model of the equipment and the space (10), and operating a simulation program to render graphically calculated positions of the component (8); and
- obtaining signals from a number of non-contact transmitters (12) monitoring the space (10),
- converting the calculated positions of the component (8) into comparable picture information;
- converting the signals from the non-contact transmitters (12) into comparable picture information;
- calculating a deviation by comparing the converted comparable picture information from the calculated positions with the converted comparable picture information from the non-contact transmitters (12), the comparison being performed at pixel level for individual pixels and / or group of pixels.

By calculated position is meant here a position calculated based on a 3D model of the equipment where "are"-values supplied to the control system from transmitters fitted on or at the relevant component is used. This gives an essentially more reliable calculated position than by use of "shall"-values for the relevant components where one bases it on the set values for the component being realized. In that more positions on the component are calculated, the component's spatial orientation is also calculated.

The component's position may be measured non-contact, typically by reflection of energy waves, for example in the form of visible light being intercepted by a camera. Energy waves in other frequency areas may, depending on the actual conditions, be relevant.

The method may further comprise filtering of data for the calculated position and data for the real position in the same way before the deviation is calculated. The filtering is explained more closely in the specific part of the application.

The method may comprise giving off a warning when the deviation exceeds a predetermined value.

The method may comprise showing a calculated picture of the component based on calculated position and showing a real picture of the component based on the measured position. The measured picture may be shown superimposed on the calculated picture or *vice versa.*

In a simple, visual form a picture produced by means of a camera is superimposed on a calculated 2D picture of the same area, whereby deviations will immediately be visible. A thus simplified method will however not be able to calculate deviations between the pictures.

It is thus necessary to treat both signals for the calculated position and for the real position to make them comparable, see the specific part of the application.

The method may be performed by means of a device for monitoring the operation of automatic or autonomous equipment, where the equipment comprises a component being spatially displaced for operating a machine for treating a pipe string, the device comprising:

- a control system for calculating the component's position in the space, the control system being configured for building a 3D model of the equipment and the space, and operating a simulation program to render graphically calculated positions of the component, wherein the device further comprises:

- a non-contact transmitter, external to said component, arranged to be able to give off a signal comprising a real position of the component in the space; and

- a processing unit adapted to calculate a deviation between said calculated position and said measured position, the processing unit being configured to carry out the two converting steps and the deviation calculating step described above.

A deviation module may be used to compare picture information from a refining module for calculated position and a refining module for real position, as the deviation module is arranged to be able to give off a warning if the deviation is larger than a predetermined value.

The device may be as defined in claim 7.

The method and the device according to the invention makes secure monitoring and warning possible on deviations for automatic and autonomous equipment located for example in inaccessible places such as the seabed, or in areas where operator presence may be associated with danger

There may be presented pictures from different angles as non-contact transmitters may be positioned in different positions to intercept events in the space. Full 3D surveillance of the space where a number of active and passive machines are located, is thus possible by means of appropriately placed non-contact transmitters.

In the following is described an example of a preferred method and device illustrated in the accompanying drawings, where:

Fig. 1 shows a layout of equipment according to the invention;

Fig. 2 shows a flow diagram for weighting of reflectance and light intensity; and

Fig. 3 shows the same as in Fig. 1, but where pictures of calculated position and real position are shown.

In the drawings the reference number 1 indicates a machine in a process, for example for treatment of a pipe string 2. The machine 1 is operated by a manipulator 4 which may be controlled manually, automatically, or autonomously by or via a control system 6.

The manipulator 4 is provided with a component 8, here in the form of a gripper, which is displaceable in the space 10.

The space 10 is lit by means of not shown lamps. A number of non-contact transmitters 12, here in the form of cameras, monitor the space 10 from different positions.

The control system 6 comprises a program arranged to be able to provide the necessary information for building a 3D model of the manipulator 4. The 3D model is dynamic in the sense that it is continuously updated to be able to show the actual position of the component 8. Information about the machine 1 and the space 10 is also included in the 3D model. A control and simulation program marketed under the name "Actin" by Energid Technologies Corporation, Cambridge, MA, USA has turned out to be suitable for both control of the manipulator and to render graphically calculated spatial positions for a component 8. The "Actin" technique is described in US patent 6757587.

From the control system 6 the information about the calculated position of the component 8 is led to a processing unit 14 where said information is processed in a refining module for calculated position 16.

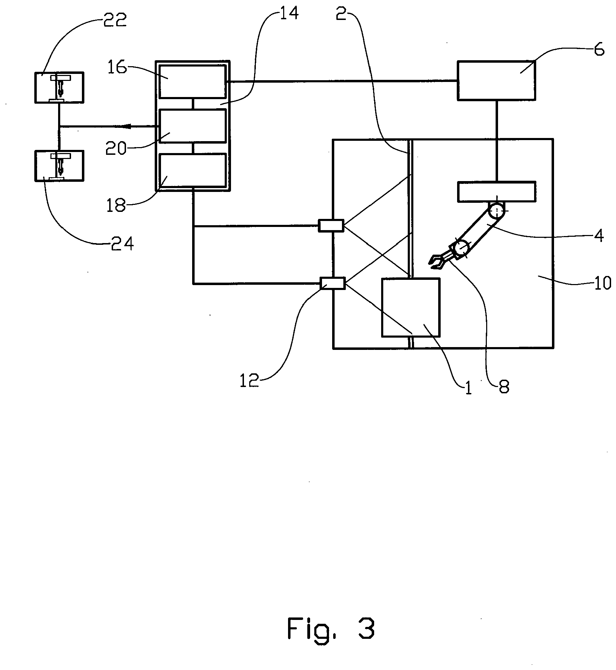

The signals from the control system 6 and from the non-contact transmitters 12 are converted in the refining module for a calculated position 16 and a refining module for a real position 18, respectively, for comparable picture information. The comparison is undertaken in a deviation module 20. A picture 22 based on a calculated position and a picture 24 based on a real position may be shown, see Fig. 3.

Pictures from different angles may be presented, as non-contact transmitters 12 may be located in different positions to intercept events in the space 10. The refining modules 16, 18 may present a series of pictures to the deviation module for example from the number of non-contact transmitters 12. Full 3D surveillance of the space is thus possible by means of suitably located non-contact transmitters 12.

An identification and localisation program marketed under the name "Selectin" by Energid Technologies Corporation comprises a part of the algorithm necessary to be used in the refining modules 16 and 18. "Selectin" thus forms a basis for the software developed to be able to compare the calculated position with the real position. The "Selectin" technique is described in US patent application 11/141.843.

The comparison is performed at pixel level for individual pixels and/or group of pixels. In that several pixels from the calculated position normally are compared to corresponding pixels from the real position, the orientation of the component in the space 10 is simultaneously determined.

The signals fed to the refining modules 16, 18 may contain errors. For example, distortion, pixel noise and loss of contrast from the non-contact transmitters. These errors are not present in the signal from the control system 6. Also occurring is that the 3D model is incomplete or that the transmission is faulty.

In the refining module for the calculated position 16 and the refining module for the real position 18 is therefore performed signal refining which may comprise removal of pixel noise, normalisation of contrast, normalisation of intensity, correction for objective distortion, and blocking of areas having non-relevant deviations. Both the calculated positions and the actual positions are updated continuously at the same time as relevant features are calculated and amplified.

Pixel noise is removed by so-called median filtering, which is a non-linear technique. See R. Boyle and R. Thomas: Computer Vision: A First Course, Blackwell Scientific Publications, 1988, pp 32-34.

The contrast is normalised by means of so-called homomorphous filtering, which also removes so-called artefacts. By artefacts is meant undesired, often artificial effects of light setting. See http://homepages.inf.ed.ac.uk/rbf/Cvonline/LOCAL COPIES/OWENS/LECT5/node4.html for further explanation.

A main task in the refining is to remove undesired artefacts coming from the lighting. The intensity $f(i, j)$ of a pixel $i,j$ in a picture may be represented by $f(i,j) = i(i,j)r(i,j)$ where $r(i,j)$ is a measure of the observed reflectance from an observed surface, and $i(i,j)$ is the intensity of the lighting on the observed surface.

The reflectance (spectral properties) varies generally at a higher spatial rate than the lighting. Spatial rate is change related to a displacement over a distance as opposed to velocity. If one for example has a sequence of pictures like in a video stream, there may occur temporary changes in a pixel from one picture to the next, and spatial changes are from one pixel to the next in the same picture.

It is desirable to suppress the effect of the lighting because it does not contribute information to identify physical deviations. A logarithmic operator, log*(), may be employed to split the intensity and the reflectance to suppress or reduce the effect of variation in the light intensity.

$$\log^*\{(f(i,j)\} \approx \log^*\{(i(i,j)\} + \log^*\{(r(i,j)\}$$

On the assumption that the lighting intensity is changed slowly and that the surface properties, represented by the reflectance, are changed rapidly, the light intensity may be emphasized by means of low pass filtration and the surface properties emphasized by means of high pass filtration of the log-transformed values.

By multiplying the low-pass filtered signal, LPF, by a factor $k_L$ being smaller than 1, and the high-pass filtered signal, HPF, by a factor $k_H$ being larger than 1, the surface properties are emphasized at the cost of the light intensity.

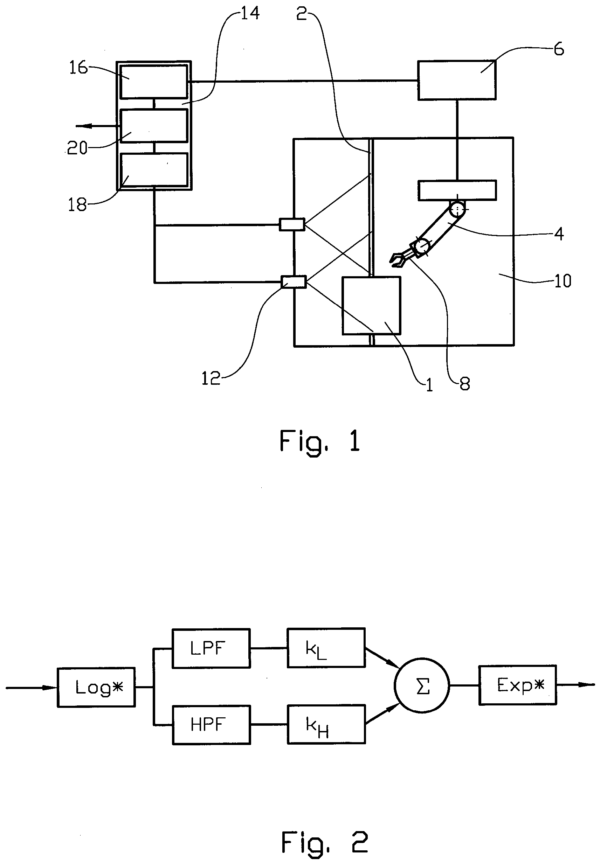

The log* function and an exp* function: $\exp^*\{\log^*(X)\} = x$, maps the area 0-255 over in 0-255 approximate, respective logarithmic and exponential functions, see Fig. 2. 0-255 is chosen because this area may be represented by a single byte, which is the most common picture representation.

Other known methods may to a necessary degree be used for further signal treatment in addition to median and homomorphous filtering. Extensible Markup Language XML has turned out to be suitable for assembling of different filter components.

For picture deviation a weighted n-norm on pixel for pixel difference between the refined, calculated position and the refined actual position turned out to be suitable. The homomorphous filtering moderates undesired appearance changes caused by lighting. These are changes not taken into account. It is not desirable in filtering to introduce artificial changes between the calculated and the real picture. The filtering is therefore done before the pictures are compared.

Deviation calculations are as earlier mentioned made over different areas of the equipment. The two-norm method (the sum of squares) has turned out to be suitable to detect differences, but other known methods, such as the sum of absolute pixel differences or the sum of the fourth power of the differences, may function satisfactorily.

Calibrating the calculated position and the real position constitutes a part of the method. Selectin's "Refined Type, Pose, Geometry" (RTPG) processor is used to decide how best to decide deviations between the calculated position and the actual position. RTPG utilises DAK models for the machine 1, the manipulator 4 and the space 10 together with actual position data for repeatedly to give off and subsequently change the picture information to best fit with the transformed data from the non-contact transmitters.

**Claims**

1. A method for monitoring the operation of automatic or autonomous equipment where the equipment comprises a component (8) being displaced in a space (10) for operating a machine (1) for treating a pipe string (2), and where the method comprises:

   - calculating the component's (8) position in the space (10) by means of data from a component control system (6);
   - building a 3D model of the equipment and the space (10), and operating a simulation program to render graphically calculated positions of the component (8); and
   - obtaining signals from a number of non-contact transmitters (12) monitoring the space (10),

   **characterized in that** the method further comprises:

   - converting the calculated positions of the component (8) into comparable picture information;
   - converting the signals from the non-contact transmitters (12) into comparable picture information;
   - calculating a deviation by comparing the converted comparable picture information from the calculated positions with the converted comparable picture information from the non-contact transmitters (12), the comparison being performed at pixel level for individual pixels and / or group of pixels;
   - giving off a warning when the deviation exceeds a predetermined value.

2. A method according to claim 1, **characterized in that** the method comprises performing any of the following signal refinements:

- removal of pixel noise;
- normalisation of contrast;
- normalisation of intensity;
- correction for objective distortion; and

blocking of areas having non-relevant deviations.

3. A method according to claim 1, **characterized in that** the method further comprises:

- to show a picture (22) of the component (8) based on the calculated position (calculated picture);
- to show a picture (24) of the component (8) based on the measured position (measured picture).

4. A method according to claim 1, **characterized in that** the method further comprises:

- to show the measured picture (24) superimposed on the calculated picture (22).

5. A device for monitoring the operation of automatic or autonomous equipment, where the equipment comprises a component (8) being displaced in a space (10) for operating a machine (1) for treating a pipe string (2), the device comprising:

- a control system (6) for calculating the component's position in the space (10), the control system (6) being configured for building a 3D model of the equipment and the space (10), and operating a simulation program to render graphically calculated positions of the component (8),

**characterized in that** the device further comprises:

- a non-contact transmitter (12), external to said component (8), arranged to be able to give off a signal comprising a real position for the component (8) in the space (10), and
- a processing unit (14) adapted to calculate a deviation between said calculated position and said measured position, the processing unit (14) being configured to carry out the two converting steps and the deviation calculating step described in claim 1;
- the control system (6) being configured to give off a warning when the deviation exceeds a predetermined value.

6. A device according to claim 5, **characterized in that** the device further comprises:

- a first refining module (16) configured to convert the calculated positions of the component (8) into comparable picture information;
- a second refining module (18) configured to convert the signals from the non-contact transmitter (12) into comparable picture information; and
- a deviation module (20) configured to calculate a deviation by comparing the converted comparable picture information from the calculated positions with the converted comparable picture information from the non-contact transmitters (12), the comparison being performed at pixel level for individual pixels and / or group of pixels.

**Patentansprüche**

1. Ein Verfahren zur Überwachung des Betriebs einer automatischen oder autonomen Vorrichtung, wobei die Vorrichtung ein Bauteil (8) umfasst, das in einem Raum (10) zum Betreiben einer Maschine (1) zur Behandlung eines Rohrstrangs (2) verschoben wird, und wobei das Verfahren umfasst:

- Berechnen der Position des Bauteils (8) im Raum (10) mit Hilfe von Daten aus einem Bauteil-Steuersystem (6);
- Erstellen eines 3D-Modells der Vorrichtung und des Raums (10) und Betreiben eines Simulationsprogramms, um grafisch berechnete Positionen des Bauteils (8) darzustellen; und
- Erhalten von Signalen von einer Anzahl von berührungsfreien Sendern (12), die den Raum (10) überwachen,

**dadurch gekennzeichnet, dass** das Verfahren ferner umfasst:

- Umwandeln der berechneten Positionen des Bauteils (8) in vergleichbare Bildinformationen;
- Umwandeln der Signale der berührungsfreien Sender (12) in vergleichbare Bildinformationen;
- Berechnen einer Abweichung durch Vergleichen der umgewandelten vergleichbaren Bildinformationen der berechneten Positionen mit den umgewandelten vergleichbaren Bildinformationen der berührungsfreien Sender (12), wobei der Vergleich auf Pixelebene für einzelne Pixel und/oder eine Gruppe von Pixeln erfolgt;
- Ausgeben einer Warnung, wenn die Abweichung einen vorgegebenen Wert überschreitet.

2. Ein Verfahren nach Anspruch 1, **dadurch gekennzeichnet, dass** das Verfahren die Durchführung einer der folgenden Signalverfeinerungen umfasst:

- Entfernen von Pixelrauschen:
- Normalisieren des Kontrastes;
- Normalisieren der Intensität;
- Korrigieren der Objektivverzeichnung; und
- Ausblenden von Bereichen mit irrelevanten Abweichungen.

3. Ein Verfahren nach Anspruch 1, **dadurch gekennzeichnet, dass** das Verfahren ferner umfasst:

- Anzeige eines Bilds (22) des Bauteils (8) auf der Grundlage der berechneten Position (berechnetes Bild);
- Anzeige eines Bilds (24) des Bauteils (8) auf der Grundlage der gemessenen Position (Messbild).

4. Ein Verfahren nach Anspruch 1, **dadurch gekennzeichnet, dass** das Verfahren ferner umfasst:

- Überlagerte Darstellung des gemessenen Bilds (24) auf dem berechneten Bild (22).

5. Eine Vorrichtung zur Überwachung des Betriebs einer automatischen oder autonomen Vorrichtung, wobei die Vorrichtung ein Bauteil (8) umfasst, das in einem Raum (10) zum Betreiben einer Maschine (1) zur Behandlung eines Rohrstrangs (2) verschoben wird, wobei die Vorrichtung umfasst:

- ein Steuersystem (6) zum Berechnen der Position des Bauteils in dem Raum (10), wobei das Steuersystem (6) so konfiguriert ist, dass es ein 3D-Modell der Vorrichtung und des Raums (10) bildet und ein Simulationsprogramm betreibt, um grafisch berechnete Positionen des Bauteils (8) wiederzugeben,

**dadurch gekennzeichnet, dass** die Vorrichtung ferner umfasst:

- einen berührungsfreien Sender (12), der sich außerhalb des genannten Bauteils (8) befindet und so beschaffen ist, dass er ein Signal abgeben kann, das eine tatsächliche Position des Bauteils (8) im Raum (10) enthält, und
- eine Verarbeitungseinheit (14), die geeignet ist, eine Abweichung zwischen der genannten berechneten Position und der genannten gemessenen Position zu berechnen, wobei die Verarbeitungseinheit (14) so konfiguriert ist, dass sie die beiden in Anspruch 1 beschriebenen Umwandlungsschritte und den Schritt zur Berechnung der Abweichung ausführt;
- das Kontrollsystem (6) so konfiguriert ist, dass es eine Warnung ausgibt, wenn die Abweichung einen vorgegebenen Wert überschreitet.

6. Eine Vorrichtung nach Anspruch 5, **dadurch gekennzeichnet, dass** die Vorrichtung ferner umfasst:

- ein erstes Verfeinerungsmodul (16), das so konfiguriert ist, dass es die berechneten Positionen des Bauteils (8) in vergleichbare Bildinformationen umwandelt;
- ein zweites Verfeinerungsmodul (18), das so konfiguriert ist, dass es die Signale des berührungsfreien Senders (12) in vergleichbare Bildinformationen umwandelt; und
- ein Abweichungsmodul (20), das so konfiguriert ist, dass es eine Abweichung berechnet, indem es die umgewandelten vergleichbaren Bildinformationen der berechneten Positionen mit den umgewandelten vergleichbaren Bildinformationen der berührungsfreien Sender (12) vergleicht, der Vergleich auf Pixelebene für einzelne Pixel und/oder Pixelgruppen durchgeführt wird.

## Revendications

1. Un procédé pour contrôler le fonctionnement d'un équipement automatique ou autonome dans lequel l'équipement comprend un composant (8) étant déplacé dans un espace (10) pour faire fonctionner une machine (1) pour le traitement d'un train de tiges (2), et dans lequel le procédé comprend :

- calculer la position du composant (8) dans l'espace (10) à l'aide de données issues d'un système de contrôle de composant (6) ;
- construire un modèle 3D de l'équipement et de l'espace (10), et faire fonctionner un programme de simulation pour présenter graphiquement les positions calculées du composant (8) ; et
- obtenir des signaux à partir d'un nombre d'émetteurs sans contact (12) contrôlant l'espace (10),

**caractérisé en ce que** le procédé comprend également :

- convertir les positions calculées du composant (8) en informations imagées comparables ;
- convertir les signaux des émetteurs sans contact (12) en informations imagées comparables ;
- calculer une déviation en comparant les informations imagées comparables converties issues des positions calculées avec les informations imagées comparables converties issues des émetteurs sans contact (12), la comparaison étant réalisée au niveau des pixels pour les pixels individuels et/ou groupes de pixels ;
- émettre un avertissement lorsque la déviation excède une valeur prédéterminée.

2. Un procédé selon la revendication 1, **caractérisé en ce que** le procédé comprend la réalisation de l'un quelconque des raffinages de signal suivants :

- élimination de bruit de pixel ;
- normalisation de contraste ;
- normalisation d'intensité ;
- correction de distorsion d'objectif ; et
- blocage de zones ayant des déviations non pertinentes.

3. Un procédé selon la revendication 1, **caractérisé en ce que** le procédé comprend également :

- montrer une image (22) du composant (8) en fonction de la position calculée (image calculée) ;
- montrer une image (24) du composant (8) en fonction de la position mesurée (position mesurée).

4. Un procédé selon la revendication 1, **caractérisé en ce que** le procédé comprend également :

- montrer l'image mesurée (24) superposée sur l'image calculée (22).

5. Un dispositif pour contrôler le fonctionnement d'un équipement automatique ou autonome, dans lequel l'équipement comprend un composant (8) étant déplacé dans un espace (10) pour faire fonctionner une machine (1) pour le traitement d'un train de tiges (2), le dispositif comprenant :

- un système de contrôle (6) pour calculer la position du composant dans l'espace (10), le système de contrôle (6) étant configuré pour construire un modèle 3D de l'équipement et de l'espace (10), et faire fonctionner un programme de simulation pour présenter graphiquement les positions calculées du composant (8),

**caractérisé en ce que** le dispositif comprend également :

- un émetteur sans contact (12), externe audit composant (8), arrangé pour être capable d'émettre un signal comprenant une position réelle pour le composant (8) dans l'espace (10), et
- une unité de traitement (14) adaptée pour calculer une déviation entre ladite position calculée et ladite position mesurée, l'unité de traitement (14) étant configurée pour exécuter les deux étapes de conversion et l'étape de calcul de déviation décrite dans la revendication 1 ;
- le système de contrôle (6) étant configuré pour émettre un avertissement lorsque la déviation excède une valeur prédéterminée.

6. Un dispositif selon la revendication 5, **caractérisé en ce que** le dispositif comprend également :

- un premier module de raffinage (16) configuré pour convertir les positions calculées du composant (8) en informations imagées comparables ;
- un second module de raffinage (18) configuré pour convertir les signaux issus des émetteurs sans contact (12) en informations imagées comparables ; et
- un module de déviation (20) configuré pour calculer une déviation en comparant les informations imagées comparables converties issues des positions calculées avec les informations imagées comparables converties issues des émetteurs sans contact (12), la comparaison étant réalisée au niveau des pixels pour les pixels individuels et/ou groupes de pixels.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100017032 A1
- EP 0963816 A2
- US 6757587 B
- US 11141843 B

**Non-patent literature cited in the description**

- **R. BOYLE ; R. THOMAS.** Computer Vision: A First Course. Blackwell Scientific Publications, 1988, 32-34